# EUROPEAN PATENT SPECIFICATION

(11) **EP 3 747 637 B1**
(45) Date of publication and mention of the grant of the patent: **03.05.2023**
(21) Application number: 19382472.9
(22) Date of filing: 06.06.2019
(51) Int. Cl.: B29C 65/02, B29C 65/48, B29C 65/50, B29C 65/00, B29C 70/08, B29C 70/84, B29C 65/06, B29C 65/08, B29L 31/30, B29C 70/38

(54) **METHOD TO INTEGRATE A FIRST PART AND A SECOND PART COMPRISING COMPOSITE MATERIAL**
VERFAHREN ZUR INTEGRATION EINES ERSTEN TEILS UND EINES ZWEITEN TEILS MIT VERBUNDWERKSTOFF
PROCÉDÉ POUR INTÉGRER UNE PREMIÈRE PARTIE ET UNE SECONDE PARTIE COMPRENANT UN MATÉRIAU COMPOSITE

(43) Date of publication of application: 09.12.2020
(73) Proprietor: Airbus Operations, S.L.U., 28906 Getafe (Madrid) (ES)
(72) Inventor: SANCHEZ PEREZ, Melania, 28008 Madrid (ES); CANAS RIOS, María Almudena, 28906 Getafe (Madrid) (ES)
(74) Representative: Elzaburu S.L.P.

(56) References cited:
- EP-A1- 2 881 238
- WO-A1-2017/051081
- US-A1- 2017 320 242

## Description

### Field of the invention

This invention refers to a method to integrate a first part and a second part, both of them comprising composite material, and is appropriate to be used in manufacturing structural parts of an aircraft by integrating parts of an aircraft (such as frames, ribs, stringers, beams, etc.) with skins of shells or with other parts of an aircraft.

### Background of the invention

The manufacturing of integrated parts with thermoset materials in an aircraft is already known in the state of the art. By means of co-curing or co-bonded processes, stringers and/or stiffeners could be integrated in a skin, but frames or ribs are normally riveted.

Concerning thermoplastic materials, ribs/frames plus stringers can be integrated with the skin by means of welding instead of riveting/fastening them. There are several heating technologies for thermoplastic welding (induction, resistive, ultrasonic, friction...) but all of them have constraints for aeronautical structural applications in which resins such as PEKK, PEEK, etc., are needed. So far there is no industrialized welding process for structural joints with these materials.

Another manufacturing process to integrate thermoplastic parts with a thermoplastic skin or similar is the in-situ consolidation (ISC) process. In this technology, each tape is melted by a heat source, welded to the layer below, compressed by e.g. a roller, and cooled down below melting temperature. If this is done properly, an in-situ consolidation can be achieved, which means no additional consolidation process is needed. One drawback of this technology is the low speed at which material should be laid-up to assure the in-situ consolidation. However, nowadays this process is under development trying to reach higher process speed that makes the technology more suitable for industrial application.

Talking about hybrid thermoplastic-thermoset structures, several patent documents exist that deal with the joining of composite components using low temperature thermoplastic film fusion as PEI or PES. This film is co-consolidating with a semi-crystalline thermoplastic part (prepreg normally) as the ones required in aeronautics (PEEK, PEKK, PPS). Then, this component is joined to a thermoset prepreg fresh laminate (epoxy resin based) in a posterior curing process at 180ºC. Air-inlets are made with this process.

US 2017320242 A1 relates to a device for producing a reinforcing structure, which comprises a fiber-reinforced strip having a thermoplastic material, onto a molded body surface. The device is characterized in that emission direction vectors of at least two laser diodes of a laser diode array are aligned in a non-parallel manner to one another and are directed toward one another in the direction of a heating surface of the strip and/or the molded body surface.

WO 2017051081 A1 relates to a method for producing a reinforced part, comprising the draping of unidirectional continuous fibres on a metal part equipped with an adhesive layer including at least a first thermoplastic polymer, said fibres being pre-impregnated with at least a second thermoplastic polymer, said draping comprising the automated placement of pre-impregnated fibres on the metal part using a compacting roller and the heating of the pre-impregnated continuous fibres to be draped and the adhesive layer of the metal part to a temperature at least greater than or equal to the melting point of the second polymer, in order to weld the pre-impregnated fibres to the metal part.

EP 2881238 A1 discloses a hybrid composite structure that includes a molded thermoplastic composite component and a laminate thermoplastic composite component co-welded together. The molded component is reinforced with discontinuous fibers, and the laminate component is reinforced with continuous fibers.

### Summary of the invention

The object of the present invention is to provide a method to integrate a first part and a second part comprising composite material, both parts being at least partially thermoplastic parts, using the in-situ consolidation (ISC) technology and other technologies and having a higher process speed.

The invention provides a method to integrate a first part and a second part comprising composite material, both parts being at least partially thermoplastic parts, that comprises the following steps:
- providing the first part,
- placing the first part in a tool,
- applying in-situ consolidation process, such that integration layers of thermoplastic material are laid on thermoplastic plies of the first part and the integration of the first part with the integration layers is obtained, the integration layers being the first layers of the second part, wherein the applied in-situ consolidation process comprises the following sub-steps:
   - a tape is melted by a heat source, and welded to the layer below,
   - compression by a roller, and
   - cooling down below melting temperature of thermoplastic,
- laying the rest of the second part, and
- curing the rest of the second part,
wherein the second part is a hybrid part with integration layers of thermoplastic material and the rest of the second part is of thermoset material, and the integration layers and the rest of the second part are joined by means of integration elements before the curing step of the rest of the second part.

The method of the invention allows to provide a feasible and automated manufacturing process for structural parts (for example, of an aircraft) with the following advantages:
- Reduction of assembly time.
- Reduction of fastening by maximizing integration at manufacturing level. For example, stringers and frames in aircraft structures can be integrated with more simplified tooling than existing processes.
- Reduction of elementary parts to be managed at assembly stages, maximizing the integration at manufacturing level.
- Improvement of the environmental impact by enlarging the use of thermoplastic technology in the aircraft (recyclability).
- Automated and robust process.
- Simplified integration tooling as the thermoplastic part will act as curing tool for the thermoset laminate.
- Integration assuring the quality of the interface
- Manufacturing of all parts/skin not with the same technology but with the optimal one (thermoplastic, thermoset, metal).

Other characteristics and advantages of the present invention will be clear from the following detailed description of the embodiments illustrative of its object in relation to the attached figures.

### Brief description of drawings

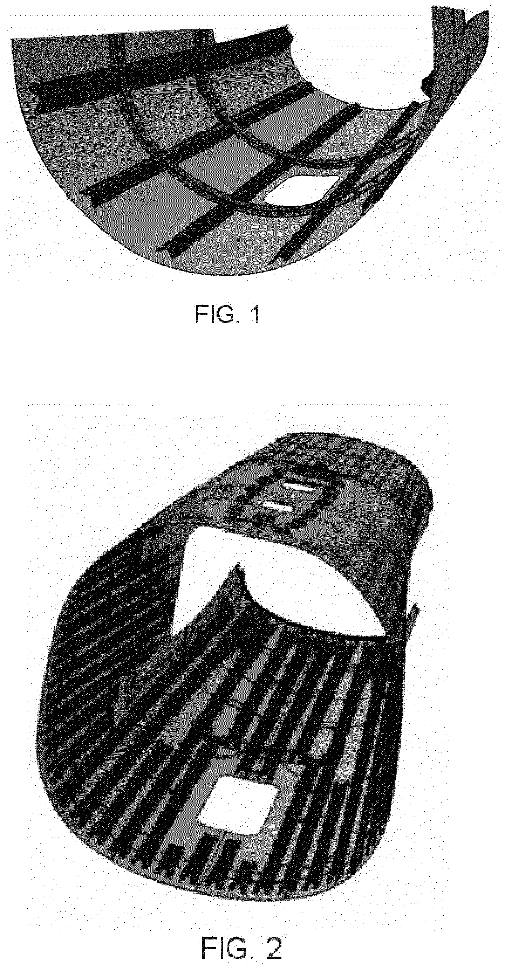

Figure 1 shows a partial view of a prior art fuselage shell of an aircraft with frames and stringers on the skin of the fuselage shell.
Figure 2 shows a full thermoset prior art barrel of an aircraft with omega stringers cocured.
Figure 3 shows the in-situ consolidation (ISC) process schematically.
Figure 4 shows the parts to be integrated with the method of the invention, as well as the integration layers and the integration element.

### Detailed description of the invention

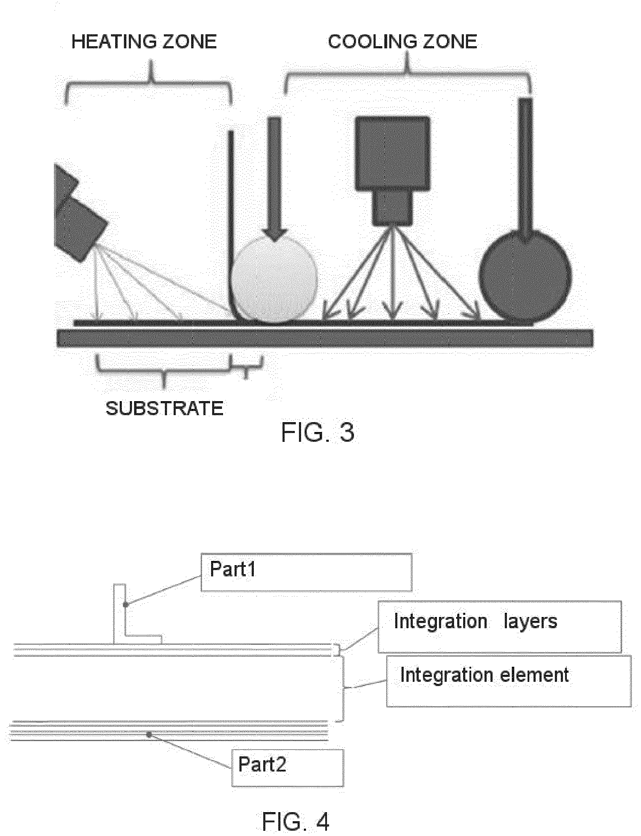

Figure 4 shows a first part 1 and a second part 2, both of them comprising composite material, which can be integrated by means of the method of the invention.

Basically, the method deals with the use of the in-situ consolidation (ISC) technology for the integration of a first part 1 which comprises thermoplastic, to the first layers (hereafter referred to as "integration layers" 3) of a second part 2 which also comprises thermoplastic, and then it uses another technology for the rest of the thickness of the second part 2.

The method to integrate a first part 1 and a second part 2 comprising composite material of the invention basically comprises the following steps:
- providing the first part 1,
- placing the first part 1 in a tool,
- applying in-situ consolidation process, such that integration layers 3 of thermoplastic material are laid on thermoplastic plies of the first part 1 and the integration of the first part 1 with the integration layers 3 is obtained, the integration layers 3 being the first layers of the second part 2,
- laying the rest of the second part 2, and
- curing or consolidation of the rest of the second part 2.

The applied in-situ consolidation process is schematically shown in Figure 3 and comprises the following sub-steps:
- a tape is melted by a heat source, and welded to the layer below, in a heating area
- compression by a roller, and
- cooling down below melting temperature of thermoplastic, in a cooling area.

As for the material used for the first part 1, it can be a part completely made of thermoplastic material. It can also be a hybrid part of thermoplastic and thermoset material, or a hybrid part of thermoplastic material and metal. The last plies of the first part 1 (i.e., those in contact with the integration layers 3 of the second part 2) are from thermoplastic.

As for the material used for the second part 2, it is a hybrid part with integration layers 3 of thermoplastic material and thermoset material in the rest of the second part 2. The second part 2 can additionally comprise metal.

The second part 2 is a hybrid part with integration layers 3 of thermoplastic material and thermoset material in the rest, and the integration layers 3 and the rest of the second part 2 are joined if needed by means of integration elements 4 that will be placed/applied between integration layers 3 and thermoset plies before the curing step of the rest of the second part 2.

The method is specifically applicable to integrate thermoplastic parts into thermoplastic/thermoset material skins or other parts of an aircraft.

The integration elements 4 can be, for example:
- Structural adhesive bonding to join dissimilar materials (e.g. thermoplastics to thermosets or metals).
- Multiple bonded system combinations.
- Surface preparation to prevent or remove contaminants and also to create chemically active sites improving the bonding.
- Material with processing temperature between the ones of the integration layers 3 and the second part 2.

As for the first part 1, when the method is used in manufacturing structural parts of an aircraft, it can be a frame, a rib, a stringer or a beam, for example. The second 2 part is usually the skin of a shell of an aircraft, but it can also be other parts, such as a frame, a rib, a stringer or a beam, for example.

The integration layers 3 can be laid out in planes, but they can also be in complex shapes.

Focused in automation and to assure quality of the interface, integration thermoplastic layers 3 can be laid through an automatic placement machine (APM) and consolidated at the same time (ISC process). With this process, the first ply (that will be in contact with the first part 1 to be joined) will assure the quality of the interface and will allow the integration of several and complex parts in one-shot. The second part 2 can also be laid by means of an automated laying machine (ISC for thermoplastic and AFP- Automated Fibre Placement for thermoset) but any other process is also applicable (depending on the type of material thermoset, thermoplastic or metal). Integration elements 4 act as curing/consolidation tool for the second part 2 if a second step process is needed.

Integration layers 3 are supposed to be essentially first plies of the second part 2, but they could be also part of a hybrid first part 1.

Although the present invention has been fully described in connection with preferred embodiments, it is evident that modifications may be introduced within the scope thereof, not considering this as limited by these embodiments, but by the contents of the following claims.

## Claims

1. - Method to integrate a first part (1) and a second part (2) comprising composite material, both parts (1, 2) being at least partially thermoplastic parts, the method comprising the following steps:
- providing the first part (1),
- placing the first part (1) in a tool,
- applying in-situ consolidation process, such that integration layers (3) of thermoplastic material are laid on thermoplastic plies of the first part (1) and the integration of the first part (1) with the integration layers (3) is obtained, the integration layers (3) being the first layers of the second part (2), wherein the applied in-situ consolidation process comprises the following sub-steps:
- a tape is melted by a heat source, and welded to the layer below,
- compression by a roller, and
- cooling down below melting temperature of thermoplastic,
- laying the rest of the second part (2), and
- curing or consolidation of the rest of the second part (2),
wherein the second part (2) is a hybrid part with integration layers (3) of thermoplastic material and the rest of the second part (2) is of thermoset material, and the integration layers (3) and the rest of the second part (2) are joined by means of integration elements (4) before the curing step of the rest of the second part (2).

2. - Method to integrate a first part and a second part comprising composite material, according to claim 1, wherein the second part additionally comprises metal.

3. - Method to integrate a first part and a second part comprising composite material, according to claim 1 or 2, wherein the integration elements are structural adhesive bonding, or surface preparation, or material with processing temperature between the ones of the integration layers and the rest of the second part, or a combination of some of them.

4. - Method to integrate a first part and a second part comprising composite material, according to any of the previous claims, wherein the first part is a hybrid part of thermoplastic and thermoset material.

5. - Method to integrate a first part and a second part comprising composite material, according to any of claims 1 to 3, wherein the first part is a hybrid part of thermoplastic material and metal.

6. - Method to integrate a first part and a second part comprising composite material, according to any of the previous claims, wherein the first part is a frame or a rib or a stringer or a beam or a stiffener.

7. - Method to integrate a first part and a second part comprising composite material, according to any of the previous claims, wherein the second part is a skin or a frame or a rib or a stringer or a beam.

8. - Method to integrate a first part and a second part comprising composite material, according to any of the previous claims, wherein the integration layers are laid out on planes.

9. - Method to integrate a first part and a second part comprising composite material, according to any of the previous claims, wherein the integration layers of thermoplastic material are laid through an automatic placement machine and consolidated at the same time with the in-situ consolidation process.

10. Method to integrate a first part and a second part comprising composite material, according to any of the previous claims, wherein the rest of the second part of thermoset material is laid by automated fibre placement using an automated laying machine.

## Patentansprüche

1. Verfahren zum Integrieren eines ersten Teils (1) und eines zweiten Teils (2), die Verbundmaterial umfassen, wobei beide Teile (1, 2) wenigstens zum Teil thermoplastische Teile sind, wobei das Verfahren die folgenden Schritte umfasst:
- Bereitstellen des ersten Teils (1),
- Anordnen des ersten Teils (1) in einem Werkzeug,
- Anwenden eines *In-situ*-Konsolidierungsverfahrens, wobei Integrationsschichten (3) aus thermoplastischem Material auf thermoplastische Lagen des ersten Teils (1) gelegt werden und die Integration des ersten Teils (1) mit den Integrationsschichten (3) erhalten wird, wobei die Integrationsschichten (3) die ersten Schichten des zweiten Teils (2) sind, wobei das angewendete *In-situ-*Konsolidierungsverfahren die folgenden Teilschritte umfasst:
- ein Band wird von einer Wärmequelle geschmolzen und an die darunterliegende Schicht geschweißt,
- Kompression durch eine Walze und
- Abkühlen unter die Thermoplast-Schmelztemperatur,
- Legen des Rests des zweiten Teils (2) und
- Härten oder Konsolidieren des Rests des zweiten Teils (2),
wobei der zweite Teil (2) ein hybrider Teil mit Integrationsschichten (3) aus thermoplastischem Material ist und der Rest des zweiten Teils (2) aus wärmehärtendem Material besteht, und die Integrationsschichten (3) und der Rest des zweiten Teils (2) vor dem Schritt des Härtens des Rests des zweiten Teils (2) mithilfe von Integrationselementen (4) verbunden werden.

2. Verfahren zum Integrieren eines ersten Teils und eines zweiten Teils, die Verbundmaterial umfassen, gemäß Anspruch 1, wobei der zweite Teil zusätzlich Metall umfasst.

3. Verfahren zum Integrieren eines ersten Teils und eines zweiten Teils, die Verbundmaterial umfassen, gemäß Anspruch 1 oder 2, wobei die Integrationselemente Strukturklebstoffbindung oder Oberflächenvorbereitung oder Material mit einer Verarbeitungstemperatur zwischen jenen der Integrationsschichten und des Rests des zweiten Teils oder eine Kombination von einigen davon sind.

4. Verfahren zum Integrieren eines ersten Teils und eines zweiten Teils, die Verbundmaterial umfassen, gemäß einem der vorstehenden Ansprüche, wobei der erste Teil ein hybrider Teil aus thermoplastischem und wärmehärtendem Material ist.

5. Verfahren zum Integrieren eines ersten Teils und eines zweiten Teils, die Verbundmaterial umfassen, gemäß einem der Ansprüche 1 bis 3, wobei der erste Teil ein hybrider Teil aus thermoplastischem Material und Metall ist.

6. Verfahren zum Integrieren eines ersten Teils und eines zweiten Teils, die Verbundmaterial umfassen, gemäß einem der vorstehenden Ansprüche, wobei der erste Teil ein Rahmen oder eine Rippe oder eine Wange oder ein Balken oder ein Versteifungselement ist.

7. Verfahren zum Integrieren eines ersten Teils und eines zweiten Teils, die Verbundmaterial umfassen, gemäß einem der vorstehenden Ansprüche, wobei der zweite Teil eine Haut oder ein Rahmen oder eine Rippe oder eine Wange oder ein Balken ist

8. Verfahren zum Integrieren eines ersten Teils und eines zweiten Teils, die Verbundmaterial umfassen, gemäß einem der vorstehenden Ansprüche, wobei die Integrationsschichten auf Ebenen gelegt werden.

9. Verfahren zum Integrieren eines ersten Teils und eines zweiten Teils, die Verbundmaterial umfassen, gemäß einem der vorstehenden Ansprüche, wobei die Integrationsschichten aus thermoplastischem Material durch eine automatische Platziermaschine gelegt und gleichzeitig durch das *In-situ-*Konsolidierungsverfahren konsolidiert werden.

10. Verfahren zum Integrieren eines ersten Teils und eines zweiten Teils, die Verbundmaterial umfassen, gemäß einem der vorstehenden Ansprüche, wobei des Rest des zweiten Teils aus wärmehärtendem Material durch automatisierte Faserplatzierung unter Verwendung einer automatisierten Legemaschine gelegt wird.

## Revendications

1. Procédé d'intégration d'une première pièce (1) et d'une deuxième pièce (2) comprenant un matériau composite, les deux pièces (1, 2) étant des pièces au moins partiellement thermoplastiques, le procédé comprenant les étapes suivantes :
- obtention de la première pièce (1),
- mise en place de la première pièce (1) dans un outil,
- application d'une opération de consolidation in situ, de telle sorte que des couches d'intégration (3) de matériau thermoplastique sont déposées sur des plis thermoplastiques de la première pièce (1) et l'intégration de la première pièce (1) avec les couches d'intégration (3) est obtenue, les couches d'intégration (3) étant les premières couches de la deuxième pièce (2), l'opération de consolidation in situ appliquée comprenant les sous-étapes suivantes :
- un ruban est fondu par une source de chaleur, et soudé à la couche en dessous,
- compression par un rouleau, et
- refroidissement au-dessous de la température de fusion du thermoplastique,
- dépôt du reste de la deuxième pièce (2), et
- durcissement ou consolidation du reste de la deuxième pièce (2),
dans lequel la deuxième pièce (2) est une pièce hybride avec des couches d'intégration (3) de matériau thermoplastique et le reste de la deuxième pièce (2) est un matériau thermodurcissable, et les couches d'intégration (3) et le reste de la deuxième pièce (2) sont assemblés au moyen d'éléments d'intégration (4) avant l'étape de durcissement du reste de la deuxième pièce (2).

2. Procédé d'intégration d'une première pièce et d'une deuxième pièce comprenant un matériau composite, selon la revendication 1, dans lequel la deuxième pièce comprend également un métal.

3. Procédé d'intégration d'une première pièce et d'une deuxième pièce comprenant un matériau composite, selon la revendication 1 ou 2, dans lequel les éléments d'intégration sont un assemblage par adhésif structural, ou une préparation de surface, ou un matériau avec une température de traitement entre celles des couches d'intégration et du reste de la deuxième pièce, ou une combinaison de certains d'entre eux.

4. Procédé d'intégration d'une première pièce et d'une deuxième pièce comprenant un matériau composite, selon l'une quelconque des revendications précédentes, dans lequel la première pièce est une pièce hybride de matériau thermoplastique et thermodurcissable.

5. Procédé d'intégration d'une première pièce et d'une deuxième pièce comprenant un matériau composite, selon l'une quelconque des revendications 1 à 3, dans lequel la première pièce est une pièce hybride de matériau thermoplastique et de métal.

6. Procédé d'intégration d'une première pièce et d'une deuxième pièce comprenant un matériau composite, selon l'une quelconque des revendications précédentes, dans lequel la première pièce est un cadre ou une nervure ou une lisse ou un longeron ou un raidisseur.

7. Procédé d'intégration d'une première pièce et d'une deuxième pièce comprenant un matériau composite, selon l'une quelconque des revendications précédentes, dans lequel la deuxième pièce est un revêtement ou un cadre ou une nervure ou une lisse ou un longeron.

8. Procédé d'intégration d'une première pièce et d'une deuxième pièce comprenant un matériau composite, selon l'une quelconque des revendications précédentes, dans lequel les couches d'intégration sont déposées sur des plans.

9. Procédé d'intégration d'une première pièce et d'une deuxième pièce comprenant un matériau composite, selon l'une quelconque des revendications précédentes, dans lequel les couches d'intégration de matériau thermoplastique sont déposées par une machine de mise en place automatique et consolidées en même temps avec l'opération de consolidation in situ.

10. Procédé d'intégration d'une première pièce et d'une deuxième pièce comprenant un matériau composite, selon l'une quelconque des revendications précédentes, dans lequel le reste de la deuxième pièce de matériau thermodurcissable est déposé par mise en place automatisée de fibres au moyen d'une machine de dépôt automatisé.
